# EUROPÄISCHE PATENTSCHRIFT

(11) **EP 0 782 349 B1**
(45) Veröffentlichungstag und Bekanntmachung des Hinweises auf die Patenterteilung: **26.01.2000**
(21) Anmeldenummer: 96119737.3
(22) Anmeldetag: 10.12.1996
(51) Int. Cl.: H04N 9/83, H04N 5/765, H04N 5/783

(54) **Videorecorder mit Sonderbetriebsarten**
Video tape recorder for special play modes
Magnétoscope pour modes de reproduction spéciales

(30) Priorität: 28.12.1995 DE 19548579
(43) Veröffentlichungstag der Anmeldung: 02.07.1997
(73) Patentinhaber: DEUTSCHE THOMSON-BRANDT GMBH, 78048 Villingen-Schwenningen (DE)
(72) Erfinder: Kluth, Hans-Jürgen, 78052 Villingen-Schwenningen (DE)

(56) Entgegenhaltungen:
- EP-A- 0 738 088
- EP-A- 0 738 088
- DE-A- 4 428 299

## Beschreibung

Die Erfindung geht aus von einem Videorecorder gemäß dem Oberbegriff des Anspruchs 1.

Bei einem PALplus-Fernsehsignal enthält gemäß der Norm die Zeile Nr. 23 verschiedene Kennbits für PALplus. Diese Kennbits werden in einem Fernsehempfänger ausgewertet, um bei PALplus verschiedene Umschaltungen vorzunehmen, insbesondere Umschaltung des Bildformats, Ausschaltung einer sogenannten Colorplus-Schaltung oder die Umschaltung auf Filmmode. Wenn ein derartiges Signal mit einem handelsüblichen Videorecorder aufgezeichnet wird, ist im Fernsehempfänger eine Einschaltung einer Colorplus-Schaltung oder des Filmmodes mit Helpersignalen nicht mehr sinnvoll, da dann aufgrund der Unzulänglichkeiten des Videorecorders Störungen auftreten und das Bild sogar verschlechtert werden kann. Diese Unzulänglichkeiten des Videorecorders liegen insbesondere in den unvermeidbaren Zeitfehlern und der Tatsache, daß bei der Wiedergabe die Frequenzverkopplung zwischen dem Farbträger und den Zeilensynchronimpulsen nicht mehr vorhanden ist.

Es ist daher bekannt, bei der Wiedergabe eines PALplus-Signales in einem Videorecorder die Kennbits für die Zeile 23 aus dem Signal herauszulösen, in einem Prozessor umzuschreiben und dann wieder in das Signal derart modifiziert einzufügen, daß die für die Bildwiedergabe nachteilige Einschaltung bestimmter an sich für PALplus-Betrieb notwendiger Stufen unterbleibt. Die Kennbits der Zeile 23 bleiben also auch bei Recorderbetrieb grundsätzlich in modifizierter Form im Signal erhalten.

Bei Sonderbetriebsarten des Recorders wie z.B. schneller Suchlauf vorwärts, schneller Suchlauf rückwärts, Zeitlupe, Zeitraffer und Standbild kann der auf dem Magnetband aufgezeichnete Vertikalsynchronimpuls nicht mehr einwandfrei abgetastet werden. Es ist daher bekannt, bei Sonderbetriebsarten einen künstlichen Vertikalaustastimpuls in das Signal einzutasten, dessen Dauer der Länge mehrerer Zeilen, mindestens etwa 3 Zeilen entspricht. Dieser künstliche V-Impuls dient dann im Fernsehempfänger zur Synchronisierung der Vertikalablenkung. Er hat keine zeilenfrequenten Lücken wie ein echter Vertikalimpuls, der aus fünf langen Einzelimpulsen besteht.

Es hat sich nun gezeigt, daß bei diesen Sonderbetriebsarten bei PALplus-Betrieb im wiedergegebenen Bild außer den üblichen Störungen bei Sonderbetriebsarten zusätzliche Störungen auftraten. Diese beruhten unter anderem auf einer zufallsmäßigen Formatumschaltung oder Ein- und Ausschaltung von Stufen wie Colorplus-Schaltung oder Filmmode-Schaltung.

Der Erfindung liegt die Aufgabe zugrunde, den Recorder so auszubilden, daß derartige Störungen im Bild während Sonderbetriebsarten weitestgehend vermieden werden. Diese Aufgabe wird durch die im Anspruch 1 angegebene Erfindung gelöst. Vorteilhafte Weiterbildungen der Erfindung sind in den Unteransprüchen angegeben.

Gemäß der Erfindung sind somit Umschaltmittel vorgesehen, die bei Wiedergabe während einer Sonderbetriebsart die Dauer der Vertikalaustastlücke im Signal auf einen größeren Wert umschalten. Dazu wird die Dauer der Vertikalaustastlücke auf einen derart größeren Wert umgeschaltet, daß die Zeile 23 mit Sicherheit stets unterdrückt ist.

Die Erfindung beruht auf folgender Erkenntnis. Die Lage des in bekannter Weise eingefügten künstlichen V-Austastimpulses hat gegenüber dem Original V-Impuls Toleranzen, die eine Auszählung der Zeile 23 und damit deren Auswertung nicht sicher zulassen.
Durch Ungenauigkeiten im Recorderbetrieb wie Zeitfehler und Lauffehler kann es vorkommen, daß die Zeile 23 mit den Kennbits mal im Signal erhalten bleibt und mal ausgetastet wird. Auch wenn die Zeile 23 ständig im Signal erhalten bleibt, kann es bei Sonderbetriebsarten zu den genannten Störungen kommen. Unter Ausnutzung dieser Erkenntnis wird daher die vertikale Austaslücke so verlängert, daß die Zeile 23 immer ausgetastet wird.
Durch diese Lösung wird erreicht, daß bei PALplus-Betrieb in Sonderbetriebsarten die Kennbits der Zeile 23 mit Sicherheit im angeschlossenen Fernsehempfänger keine Störungen mehr verursachen können. Die Kennbits der Zeile 23 können dann zwar im Fernsehempfänger nicht mehr ausgewertet werden. Das ist aber auch nicht notwendig, weil während der Sonderbetriebsarten die Qualitätsanforderungen an das Bild ohnehin geringer sind. Durch die verlängerte Austastung kann es zwar vorkommen, daß einige Helperzeilen für PALplus-Wiedergabe fehlen. Das ist aber kein merkbarer Nachteil, da die Qualität der Bildwiedergabe bei Sonderbetriebsarten ohnehin wesentlich herabgesetzt ist.
Dadurch, daß die erfindungsgemäße Maßnahme im Videorecorder erfolgt, sind im Fernsehempfänger zur Beseitigung der genannten Störungen keine Mittel oder Maßnahmen mehr notwendig.

Vorzugsweise ist die Dauer der verlängerten Vertikalaustastlücke so groß, daß auch der Signalinhalt der die Referenzsignale für den Schwarz- und Weißpegel enthaltenden Zeile Nr. 623 stets unterdrückt ist, weil der Kopfwechsel des Recorders deren Auswertung unmöglich macht. Vorzugsweise werden die Umschaltmittel dann betätigt, wenn bei der Wiedergabe eine eingelegte Kassette mit Aufzeichnung eines PALplus-Signals durch den WSS-Bit-Detektor des Recorders erkannt wird. Die Umschaltmittel können durch die Fernbedienungseinheit des Recorders auslösbar sein. Sie sind vorzugsweise mit der zum Einschalten einer Sonderbetriebsart dienenden Taste gekuppelt.

Die Erfindung wird im folgenden anhand der Zeichnung erläutert.
Darin zeigen
- Fig. 1: das Impulsschema während der Vertikalaustastlücke und
- Fig. 2: ein Blockschaltbild für die Realisierung der Lösung nach Fig. 1.

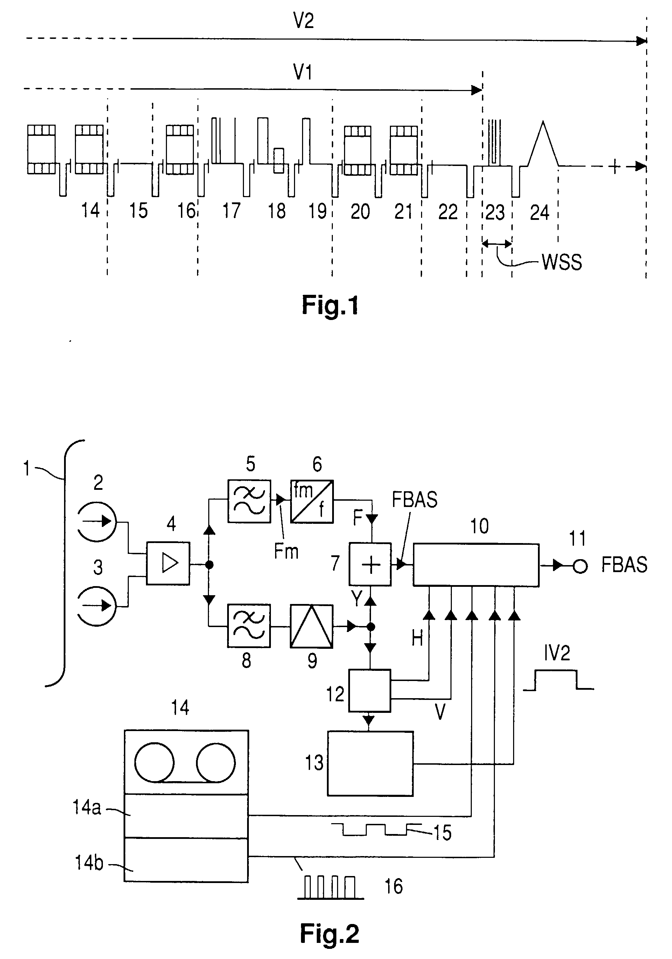

Fig. 1 zeigt das Synchronimpulsschema während der Vertikalaustastzeit im Verlauf der der Zeilen Nr. 13 - 24. Das Signal enthält während der Zeile Nr. 23 die sogenannten WSS-Bits, die die Form des jeweils vorliegenden Signal bezüglich PALplus oder nicht PALplus, Bildformat, Filmbetrieb und dgl. anzeigen. Bei einem Videorecorder kann während Sonderbetriebsarten der Vertikalsynchronimpuls nicht genügend genau und sauber vom Band abgetastet werden. Deshalb wird bei der Wiedergabe ein künstlicher Vertikalaustastimpuls in das Signal eingetastet, der im angeschlossenen Fernsehempfänger zur Synchronisierung der Vertikalablenkung dient. Diese künstliche Austastimpuls bewirkt mit eine vergrößerte Austastlücke, die die in Fig. 1 mit V1 bezeichnete Dauer hat, also bis etwa in dem Bereich der Zeile 23. Dadurch kann es bei der Wiedergabe in Sonderbetriebsarten zur Störungen kommen, indem die Zeile 23 unregelmäßig durch die Vertikalaustastung unterdrückt wird oder nicht oder auch bei ständigem Vorhandensein Störungen bewirkt.

Deshalb wird die Vertikalaustastlücke von der Dauer V1 auf die Dauer V2 verlängert, etwa bis zur Zeile Nr. 26 - 28. Dadurch wird erreicht, daß der Signalinhalt die WSS-Kennbits enthaltenden Zeile 23 bei allen vorkommenden Toleranzen und Ungenauigkeiten stets unterdrückt ist und die beschriebenen Störungen bei der Wiedergabe in Sonderbetriebsarten mit Sicherheit vermieden werden.

Die Vertikalaustastdauer V2 kann zusätzlich so früh beginnen, daß auch die Zeile Nr. 623 am Ende eines vollständigen Bildes, die Referenzsignale für den Schwarz- und Weißpegel enthält, ebenfalls stets unterdrückt ist.

In Fig. 2 wird von dem Magnetband 1 das Signal mit den beiden Videoköpfen 2, 3 abgetastet und dem Verstärker 4 zugeführt. Vom Ausgang des Verstärkers 4 gelangt das Signal über den Tiefpaß 5 mit einer Grenzfrequenz von etwa 1 MHz auf den Frequenzumsetzer 6, der die Frequenz des Color-under-Farbträgers Fm von etwa 670 kHz wieder auf die Originalfrequenz f von 4,43 MHz umsetzt. Der Farbträger F mit der PAL-Farbträgerfrequenz gelangt auf die Addierstufe 7. Das Ausgangssignal vom Verstärker 4 gelangt außerdem auf den Hochpaß 8 mit einer Grenzfrequenz von etwa 1,3 MHz. Der mit dem Leuchtdichtesignal Y modulierte Bildträger vom Ausgang des Hochpasses 8 gelangt auf den Frequenzdemodulator 9, der das Y-Signal liefert und der Addierstufe 7 zuführt. Am Ausgang der Addierstufe 7 steht dann das FBAS-Signal für die Bildwiedergabe. Dieses Signal gelangt über die Eintaststufe 10 auf die Klemme 11 und steht für die Bildwiedergabe zur Verfügung. Das Leuchtdichtesignal Y gelangt außerdem auf die Synchron-Abtrennstufe 12, die zeilenfrequente Impulse H und vertikalfrequente Impuls V an die Eintaststufe 10 liefert. Die Abtrennstufe 12 liefert außerdem ein Signal an die Schaltung 13, die einen Detektor für die Zeile Nr. 23 darstellt. Die Stufe 13 liefert eine Information IV2 an die Eintaststufe 10, die in der Eintaststufe 10 die zeitlich verlängerte Austastlücke V2 gemäß Fig. 1 bewirkt.

Dargestellt ist zusätzlich das eigentliche Recorder Laufwerk 14 mit der Servoschaltung 14a zur Steuerung der Kopftrommel und des Capstan-Antriebs sowie dem Charaktergenerator 14b. Die Servoschaltung 14a liefert den vertikalfrequenten Schaltimpuls 15 auf die Eintaststufe 10 für die Synchronisierung der Eintastvorgänge mit der Rotation der Kopftrommel. Der Charaktergenerator 14b liefert ein digitales Schriftzeichen-Signal 16, das in der Eintaststufe 10 in das laufende FBAS-Signal eingetastet wird.

Die Erfindung ist nicht auf Videorecorder mit PALplus-Aufzeichnung beschränkt, da Kennbits oder Referenzsignale nicht nur für PALplus-Signale sondern auch für PAL-Signale oder Signale gemäß anderer Fernsehübertragungsformen wie NTSC oder SECAM oder Weiterentwicklungen dieser Übertragungssysteme Anwendung finden können.

## Patentansprüche

1. Videorecorder, bei dem während Sonderbetriebsarten wie Suchlauf, Zeitraffer, Zeitlupe, Standbild ein eine Vertikalaustastlücke auslösender künstlicher Vertikalaustastimpuls (V) in das Signal eingefügt wird, **dadurch gekennzeichnet**, daß Umschaltmittel vorgesehen sind, die bei der Wiedergabe in einer Sonderbetriebsart die Dauer der Vertikalaustastlücke auf einen derart größeren Wert umgeschalten, daß der Signalinhalt der die WSS-Daten enthaltenden Zeile Nr. 23 stets unterdrückt ist.

2. Viedeorecorder nach Anspruch 1, **dadurch gekennzeichnet**, daß die Dauer der verlängerten Vertikalaustastlücke so groß ist, daß der Signalinhalt der die Referenzsignale für den Schwarz- und Weißpegel enthaltenden Zeile Nr. 623 stets unterdrückt ist.

3. Videorecorder nach einem der vorhergehenden Ansprüche, **dadurch gekennzeichnet**, daß die Umschaltmittel dann betätigt werden, wenn bei der Wiedergabe eine eingelegte Kassette mit Aufzeichnung eines PALplus-Signals durch den WSS-Bit-Detektor des Recorders, der die WSS-Daten in Zeile Nr. 23 auswertet, erkannt wird.

4. Videorecorder nach einem der vorhergehenden Ansprüche, **dadurch gekennzeichnet**, daß die Umschaltmittel (10) durch die Fernbedieneinheit des Recorders auslösbar sind.

5. Videorecorder nach einem der vorhergehenden Ansprüche, **dadurch gekennzeichnet**, daß die Umschaltmittel mit der zum Einschalten einer Sonderbetriebsart dienenden Taste gekoppelt sind.

## Claims

1. A video recorder wherein, during special operating modes such as search, fast motion, slow motion, picture freeze, an artificial vertical blanking pulse (V) triggering a vertical blanking interval is inserted into the signal, characterised in that switch-over means are provided which, upon playback in a special operating mode, switch over the duration of the vertical blanking interval to a greater value such that the signal content of line No. 23 containing the WSS data is always suppressed.

2. A video recorder according to Claim 1, characterised in that the duration of the extended vertical blanking interval is such that the signal content of line No. 623 containing the reference signals for the black and white levels is allay suppressed.

3. A video recorder according to one of the preceding claims, characterised in that the switch-over means are actuated when, upon playback, an inserted cassette containing a recorded PALplus signal is detected by the WSS bit detector of the recorder which evaluates the WSS data in line No. 23.

4. A video recorder according to one of the preceding claims, characterised in that the switch-over means (10) can be triggered by the remote control unit of the recorder.

5. A video recorder according to one of the preceding claims, characterised in that the switch-over means are coupled to the key which serves to switch on a special operating mode.

## Revendications

1. Magnétoscope pour lequel une impulsion de suppression verticale (V) artificielle déclenchant un intervalle de suppression verticale pendant le fonctionnement des modes de reproductions spéciaux tels que la recherche, le ralenti, l'accéléré et l'arrêt sur image est introduite dans le signal, **caractérisé en ce que** des dispositifs de commutation qui, lors de la reproduction en mode de reproduction spécial, prolongent la durée de l'intervalle de suppression verticale d'une certaine valeur de sorte que le contenu du signal de la ligne 23, comportant les données WSS, soit constamment atténué sont prévus.

2. Magnétoscope conforme à la revendication 1, **caractérisé en ce que** la durée de l'intervalle de suppression verticale prolongée est si élevée que le contenu de la ligne 623, comportant les signaux de référence pour le niveau du noir et du blanc, soit constamment atténué.

3. Magnétoscope conforme à l'une des revendications précédentes, **caractérisé en ce que** les dispositifs de commutation sont activés lorsque le détecteur de bits WSS, qui interprète les données WSS de la ligne 23, constate la présence d'une cassette contenant l'enregistrement d'un signal PALplus lors de la reproduction.

4. Magnétoscope conforme à l'une des revendications précédentes, **caractérisé en ce que** les dispositifs de commutation (10) peuvent être activés depuis la télécommande.

5. Magnétoscope conforme à l'une des revendications précédentes, **caractérisé en ce que** les touches permettant d'activer les dispositifs de commutation sont placées près des touches qui permettent d'activer les modes de reproduction spéciaux.
